# EUROPEAN PATENT APPLICATION

(11) **EP 4 618 363 A1**
(43) Date of publication of application: **17.09.2025**
(21) Application number: 24163867.5
(22) Date of filing: 15.03.2024
(51) Int. Cl.: H02J 7/00, H01M 10/42

(54) **ACTIVE BALANCING OF ENERGY STORAGE PREFERABLY AT MODULE AND RACK LEVEL**

(71) Applicant: Hitachi Energy Ltd, 8050 Zürich (CH)
(72) Inventor: BAI, Haofeng, 723 48 Västerås (SE); ASOODAR, Mohsen, 164 56 Stockholm (SE); BORMANN, Dierk, 723 53 Västerås (SE); AUGUSTIN, Tim, 723 59 Västerås (SE); SALINAS, Ener, 722 10 Västeras (SE); ZHANG, Hongyang, 115 24 Stockholm (SE)
(74) Representative: Vossius & Partner Patentanwälte Rechtsanwälte mbB

(57) **Abstract**

The invention provides an energy storage unit comprising: a plurality of energy storage sub-units connected in series; and one or more transformers, wherein each of the plurality of energy storage sub-units is also connected together in parallel via the one or more transformers; wherein the one or more transformers comprise a core with a plurality of windings wound around the core.

## Description

The present disclosure relates to an energy storage unit, a system comprising two such energy storage units and a method for providing an energy storage unit.

For grid connected energy storage (ES) units, the effective capacity is lower than the actual installed capacity due to the imbalance among the battery / supercapacitor modules (energy storage sub-units). Ideally, all energy storage sub-units should have the same property and the installed capacity is the same as the effective capacity. However, due to parameter tolerance and different load current distribution, perfect load distribution without additional balancing circuit is not possible. As a result, over-dimensioning is needed, and the system (ES unit) cost is increased significantly. A good balancing circuit is the key to reduce the over-dimension and system cost and increasing effective system capacity.

For some energy storage units, the energy storage sub-units may be purchased from external suppliers. Such energy storage sub-units should also be integrated into an energy storage unit with some kind of balancing circuit and/or balancing method. As a system integrator, energy storage units should have the capability to do module level balancing to reduce the system cost, while being independent from suppliers to secure safe supply change management and low purchase price.

The above-mentioned disadvantages are at least partly overcome and/or above-mentioned advantages are at least partly achieved with the features of the independent claims. Dependent claims define preferred embodiments of the invention.

The present disclosure relates to an energy storage unit comprising: a plurality of energy storage sub-units connected in series; and one or more transformers, wherein each of the plurality of energy storage sub-units is also connected together in parallel via the one or more transformers; wherein the one or more transformers comprise a core with a plurality of windings wound around the core.

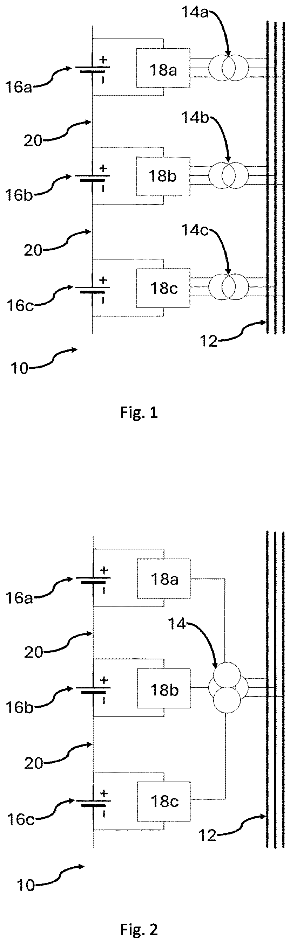

There are two pairs of connections coming from each of the plurality of energy storage sub-units. First, the connections for the series connection of the plurality of energy storage sub-units. Second, each of the plurality of energy storage sub-units is connected to the one or more transformers. This second connection may also be a connection to a same coupling point. The coupling point may be one transformer (like a transformer with more than two windings, as for example shown in fig. 2) and/or the coupling point may be a bus (as for example shown in fig. 1). Preferably, each energy storage sub-unit has two poles (connections). Both pairs of connections are connected to both poles. This means that the two different connections are also coupled to each other.

The second connection - parallel connection - may be via more than one transformer (of the one or more transformers) at a bus, or may be to one transformer (like a transformer with more than two windings, as for example shown in fig. 2), or in a different manner.

The one or more transformers comprising a core may be one transformer comprising the core or may be more than one transformer, each transformer with a core (one of the transformers comprising the before mentioned core). The plurality of windings wound around the core may be two or more windings. The plurality of windings wound around the core may be two or more windings connected to the plurality of energy storage sub-units.

Different energy storage sub-units may be similar or different to each other. This may concern each of the criteria like capacity, voltage, condition, and so on. Being similar may preferably be in borders of ± 10 %, ± 5 %, or ± 1 %.

The disclosure can balance the electric load of different energy storage sub-units (via the one or more transformers). This can increase effective system capacity and prolong the lifetime of the energy storage sub-units. The system can be made smaller, simple, and with low costs. It is also easier to produce the system or energy storage unit from the plurality of energy storage sub-units, especially when the parts (like energy storage sub-units) are bought as a whole (for example for system integrators). No changes in the parts may be necessary. Especially with active balancing circuits, the balancing can be more powerful and efficient. The power of the converter (transformer) can be dimensioned based on the need for balancing speed. The one or more transformer can provide galvanic isolation.

Various embodiments may preferably implement the following features.

Preferably, the one or more transformers is one transformer and each of the plurality of energy storage sub-units is connected to one of the plurality of windings.

The one transformer (being the one or more transformers) may have more than two windings. Preferably, the number of windings is equal to the number of energy storage sub-units connected to the one transformer plus one. Each connected energy storage sub-unit may be connected to a different one winding and the remaining winding may be connected to a bus.

With this embodiment, the total number of transformers can be reduced, reducing costs and space.

Preferably, the one transformer is connected to a bus via another winding wound around the core.

There may be more than one other winding which is wound around the core and is connected to different phases of the bus (if the bus has different phases). Preferably, there is galvanic isolation between the plurality of energy storage sub-units and the bus.

The balancing may happen via the bus.

Preferably, the one transformer is a multi-phase transformer.

There may also be more than one phase connected from each (or some) of the plurality of energy storage sub-units (which may provide more than one phase). In this case, there may be more windings around the core than the number of energy storage sub-units plus 1 (or plus the number of phases of the bus). Instead, the number of windings may be the sum of all phases of the plurality of energy storage sub-units plus the number of phases of the bus.

Preferably, the one or more transformers are a plurality of multi-phase transformers with three or more phases, wherein each transformer is on a first side connected to one of the plurality of energy storage sub-units.

In this case, the same coupling point to which the plurality of energy storage sub-units are connected (see "connection to a same coupling point" above) and where the plurality of energy storage sub-units are connected in parallel may be the bus.

With the plurality of multi-phase transformers, multi-phase energy can be provided and/or balanced (for example via a bus).

Preferably, the number of the plurality of energy storage sub-units is equal to the number of the plurality of multi-phase transformers. In this case, each transformer may be connected to a different one of the plurality of energy storage sub-units. There may be a multi-phase connection between each pair of transformer and energy storage sub-unit (the energy storage sub-unit may provide several phases which are connected to different windings of the transformer).

Preferably, each transformer of the plurality of multi-phase transformers is connected to a bus via another winding wound around the core of the corresponding transformer.

Each transformer of the plurality of multi-phase transformers may be connected to the bus in a multi-phase manner, via multiple (preferably number of phases) windings wound around the core of the corresponding transformer. Preferably, these multiple windings are only connected to the bus but not to any of the plurality of energy storage sub-units. Preferably, there is galvanic isolation between the plurality of energy storage sub-units and the bus.

It is possible that there is a number of transformers lower than the number of energy storage sub-units. There may be a mix of (one or more) transformers connected to several energy storage sub-units, as described above, and (one or more) transformer with only one energy storage sub-unit connected (single-phase or multi-phase possible). In the case of energy storage sub-units with different voltage, it is preferable to connect different transformers (and/or converters) to provide similar voltage at the bus.

Preferably, the one or more transformers are connected to the bus using an alternating current to direct current, AC-to-DC, converter.

The AC-to-DC converter may be connected between the corresponding transformer and the bus (indirect connection between the corresponding transformer and the bus as there is something connected between the corresponding transformer and the bus). Alternatively, there may be a direct connection (as there is nothing (other than the connection) connected between the corresponding transformer and the bus) between the corresponding transformer and the bus. There may be an AC-to-DC converter and then a DC-to-AC converter connected between the corresponding converter and the bus.

Preferably, the bus is configured for alternating current, AC. In this case, there is preferably no converter or an AC-to-DC converter and then a DC-to-AC converter connected between each corresponding converter and the bus.

Preferably, the bus is configured for direct current, DC. In this case, there is preferably an AC-to-DC converter connected between each corresponding converter and the bus.

Preferably, the energy storage unit further comprises a power electronics circuit connected between one of the energy storage sub-units and one of the one or more transformer.

Preferably, the energy storage unit further comprises a plurality of power electrics circuits, each of the plurality of power electrics circuits connected between a corresponding one of the energy storage sub-units and the transformer. A power electric circuit may be a converter.

Preferably, the power electronics circuit comprises a DC-to-AC converter.

The power electronics circuit may comprise an AC-to-DC converter, DC-to-AC converter, a full bridge converter, a three-phase (or more than three phase) converter, a single- phase converter, an isolated DC-to-DC converter, and/or a rectifier with a diode or thyristor. There may be several power electronics circuits, each between a different pair (or set) of energy storage sub-unit(s) and transformer. In the case of several energy storage sub-units being connected to one transformer, it is preferable to have a power electronics circuit (preferable similar circuits) between each energy storage sub-unit and the transformer.

Preferably, each of the plurality of energy storage sub-units is a direct current, DC, energy storage.

Preferably, the energy storage unit is an energy storage module and the plurality of energy storage sub-units is a plurality of energy storage cells. Energy storage cells may be batteries, accumulators, or the like.

Preferably, the energy storage unit is an energy storage rack and the plurality energy storage sub-units is a plurality of energy storage modules.

The plurality of energy storage modules may be set up as the energy storage units described above - thus creating the structure of the disclosure on two levels (rack to module level, and module to cell level). The energy storage modules may comprise a plurality of energy storage cells.

The present disclosure also relates to a system comprising two energy storage units as described above.

The two energy storage units may be similar or identical to each other (in setup and parts) or may be different: for example, one transformer connected to several energy storage sub-units and the other transformer only connected to one energy storage sub-unit.

Preferably, the two energy storage units of the system are connected to the bus. Via the bus, the two energy storage units are connected to each other in a parallel connection.

This can make the setup easier, for example by building the system in a modular manner. It can reduce costs.

The present disclosure also relates to a method for providing an energy storage unit, comprising: providing a plurality energy storage sub-units connected in series; providing one or more transformer; and connecting each of the plurality of energy storage sub-units in parallel via the one or more transformers; wherein the one or more transformers comprise a core with a plurality of windings wound around the core.

Preferably, the method further comprises connecting each of the plurality of energy storage sub-units in parallel via the one or more transformers by connecting a power electronics circuit between one of the one or more transformer and one of the plurality of energy storage sub-units.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.
Fig. 1 shows an exemplary energy storage unit with a 3-phase AC bus and multiple multi-phase transformers according to an embodiment of the present disclosure.
Fig. 2 shows an exemplary energy storage unit with one multi-winding transformer according to an embodiment of the present disclosure.
Fig. 3 shows an exemplary energy storage unit with one multi-winding transformer according to an embodiment of the present disclosure.
Fig. 4 shows an exemplary energy storage unit with one multi-winding transformer according to an embodiment of the present disclosure.
Figs. 5a and 5b show converter; and fig. 5c shows a three-phase diode rectifier according to an embodiment of the present disclosure.
Fig. 6 shows a system of two connected energy storage units according to an embodiment of the present disclosure.
Fig. 7 represents a method for providing an energy storage unit according to an embodiment of the present disclosure.

Fig. 1 shows an exemplary energy storage unit 10 with a 3-phase AC bus 12 and multiple multi-phase transformers 14 (14a, 14b and 14c) (as the one or more transformers 14). The energy storage unit 10 further comprises a plurality of energy storage sub-units 16 (16a, 16b and 16c) and optional converters 18 (18a, 18b and 18c). The energy storage sub-units 16 are connected in series at connection 20. The energy storage sub-units 16 are also connected together in parallel via the plurality of transformers 14 and the bus 12.

In this figure, three energy storage sub-units 16 and three transformers 14 are shown as plurality. It is alternatively possible to have two or more energy storage sub-units 16 and two or more transformers 14 connected in this manner (as plurality). The load of the energy storage sub-units 16 can be balanced via the transformers 14 and potentially also the bus 12. In this figure, the transformers 14 and the bus 12 are for multi-phase (in this case three phases). More (four or more) or less (single or two) phases are alternatively possible. The converters 18 are preferably DC-to-AC converters.

The energy storage sub-units 16 are preferably DC energy storage sub-units. Each of the converters 18 may also comprise several parts (as for example one or more of a DC-to-AC converter, AC-to-DC converter, a full bridge converter, a three-phase (or more than three phase) converter, a single-phase converter, an isolated DC-to-DC converter, a power electronics circuit, and/or a rectifier with a diode or thyristor). The transformers 14a to 14c have preferably two sets of windings (one set connected to the respective energy storage sub-unit 16 and the other set connected to the bus 12). Each set is shown to have three windings (according to three phases). More or less windings are possible (preferably according to the number of phases). Preferably the number of windings of the two sets is the same.

There may be additional converters between the transformers 14 and the bus 12. These additional converters may comprise one or more of DC-to-AC converter, AC-to-DC converter, a full bridge converter, a three-phase (or more than three phase) converter, a single-phase converter, an isolated DC-to-DC converter, a power electronics circuit, and/or a rectifier with a diode or thyristor.

The bus 12 may be an electrical conductor, like a cable. The bus 12 may have one or more phases. The bus 12 may be a high frequency (HV) AC bus. The bus 12 may be connected to other energy storage sub-unit strings. The transformers 14 may be chosen to provide a voltage on the bus side to allow for a thin cable as the bus 12. The bus 12 may further be connected to an auxiliary power supply.

This setup may be put together from its parts (energy storage sub-units 16, transformers 14, etc.) in an easy and cost effective manner. The parts may have been provided (bought) as whole. Then the parts may have been put together in the manner as disclosed.

Fig. 2 shows an exemplary energy storage unit 10 with one multi-winding transformer 14 (as the one or more transformers 14). As many parts in fig. 2 are the same or similar as in fig. 1 and these parts shall not again be described at this point, reference to fig. 1 is made herewith. The differences between fig. 1 and fig. 2 are described.

The transformer 14 of fig. 2 is a multi-phase transformer with more than two windings. The shown transformer 14 has six windings - three connected to the respective three phases of the bus 12, and each of the other three windings connected to a different energy storage sub-unit 16. Alternatively, different numbers of windings are possible. Preferably, the number of windings connected to the bus is equal to the number of phases of the bus (or may be double the number of windings connected to the energy storage sub-units 16 or another multiple of it). From each energy storage sub-unit 16 (maybe via the corresponding converter 18), more than one phase may be connected to the transformer 14. In this case, each phase may be connected to a different winding of the transformer 14. The total number of windings connected to the energy storage sub-units 16 may be the total number of phases over the plurality of energy storage sub-units 16. When the number of phases from each energy storage sub-unit 16 is the same, the number of windings connected to the energy storage sub-unit 16 may be the number of energy storage sub-units 16 multiplied by the number of phases from each energy storage sub-unit 16. The transformer 14 may be chosen to provide a voltage on the bus side to allow for a thin cable as the bus 12.

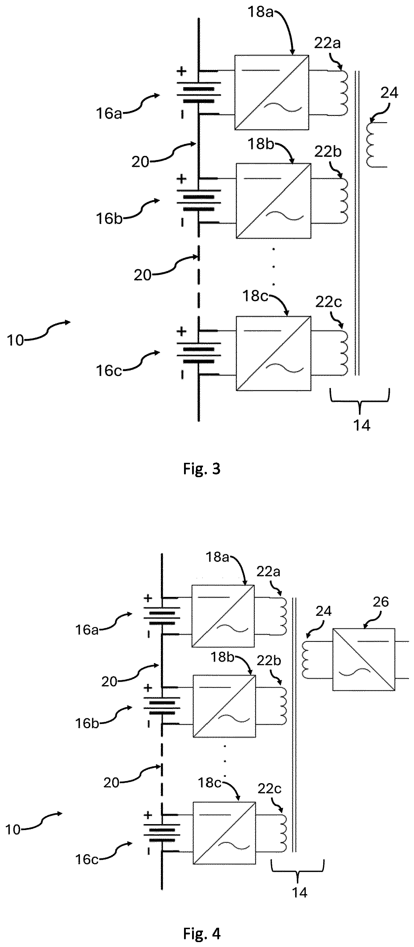

Fig. 3 shows an exemplary energy storage unit 10 with one multi-winding transformer 14 (as the one or more transformers 14). The energy storage unit 10 may comprise identical/similar parts as described for the other figures. This exemplary energy storage unit 10 of fig. 3 shows a plurality of energy storage sub-units 16, a plurality converter 18 and a plurality of primary side windings 22 (22a, 22b and 22c), wherein the plurality is of three or more of each (wherein two would also be possible). The converter 18 are DC-to-AC converter 18. The transformer 14 comprises the primary side windings 22 and a secondary side winding 24. The secondary side winding 24 may be connected to a bus 12. The energy storage unit 10 can also balance (redistribute) energy between the energy storage sub-unit 16 without the secondary side winding 24 (and without a potential bus 12).

Fig. 4 shows an exemplary energy storage unit 10 with one multi-winding transformer 14 (as the one or more transformers 14). As many parts in fig. 4 are the same or similar as in fig. 3 (and also as in figs. 1 and 2) and these parts shall not again be described at this point, reference to fig. 3 (and figs. 1 and 2) is made herewith. The differences between fig. 3 and fig. 4 are described.

The energy storage unit 10 of fig. 4 further comprises an AC-to-DC converter 26 connected to the secondary winding 24. The AC-to-DC converter 26 may on the other side be connected to a bus 12 (preferably a DC bus in this case).The AC-to-DC converter 26 may alternatively be or comprise DC-to-AC converter, AC-to-DC converter, a full bridge converter, a three-phase (or more than three phase) converter, a single-phase converter, an isolated DC-to-DC converter, a power electronics circuit, and/or a rectifier with a diode or thyristor. The converter 26 may be the additional converter mentioned above.

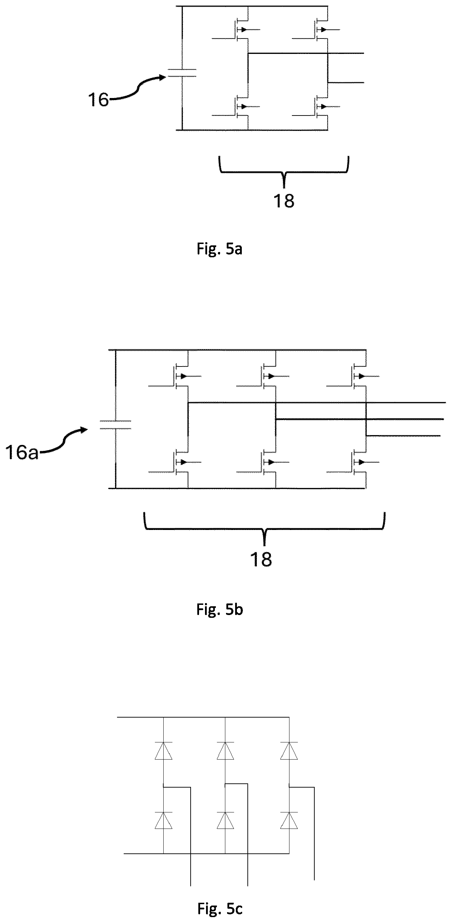

Figs. 5a and 5b show converter; and Fig. 5c shows a three-phase diode rectifier.

Fig. 5a shows an energy source (possibly an energy storage sub-unit 16) and a full bridge single phase inverter based on MOSFET (as an example for the converter 18). The system shown in fig. 5a may be an example of an energy storage sub-unit 16 with converter 18 (or for each of the plurality of these parts) as shown in the previous figures. The fundamental of an AC bus can be selected to minimize the volume and cost of the transformer. Due to the nature of single phase voltage and current, there may be 2nd order harmonics on the DC side and filter capacitor might be further included to reduce the effect of the harmonics to the lifetime of the energy storage sub-unit.

Fig. 5b shows an energy source (possibly an energy storage sub-unit 16) and a full bridge three phase inverter based on MOSFET (as an example for the converter 18). The system shown in fig. 5b may be an example of an energy storage sub-unit 16 with converter 18 (or for each of the plurality of these parts) as shown in the previous figures. Fig. 5b is similar to fig. 5a. However, to reduce the capacitance of the filter capacitor, the AC frequency can be increased or the three phase converter of fig. 5b can be used. The voltage rating of the MOSFET is determined by the energy storage sub-unit.

Both single-phase inverter and 3-phase inverter are widely available, and cost is low. R&D cost can be minimized, and multiple suppliers can secure the safety of the supply chain.

Fig. 5c shows an exemplary three phase diode rectifier. This may be an example of (a part of) the converter 18, or the additional converters (26) between the transformers 14 and the bus 12.

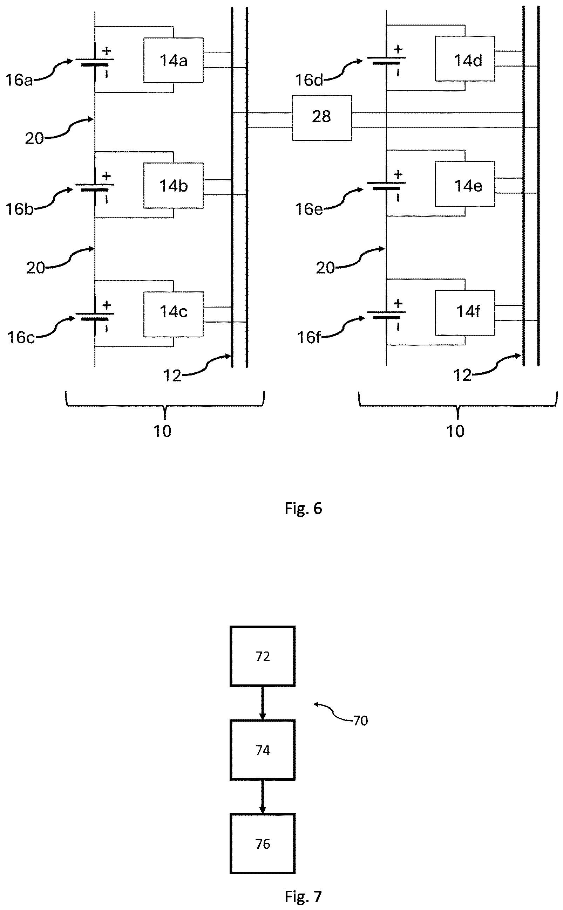

When rectifier, with diode or thyristor are used, the balancing may be working in such a way that minimum voltage of the modules is limited by the AC bus
Fig. 6 shows a system of two connected energy storage units 10. Each of the two energy storage units 10 may be as any energy storage unit 10 described in this disclosure. The system further comprises a link 28 (may be a parallel connection). The link 28 may be an electric connection. The link 28 may be made of the same parts (/material) as the bus 12. This link 28 enables energy exchange between the two energy storage units 10. The transformers 14 may further comprise converter (like converter 18).

In the case of fig. 6, it is possible that the energy storage sub-units 16 are energy storage cells, the two energy storage systems 10 are energy storage modules and the system is an energy storage rack. Alternatively, the energy storage sub-units 16 may be energy storage modules, the energy storage units 10 may be energy storage racks and the entire system is a combination of the racks. More than two energy storage units 10 may be connected using the link 28 or several links 28.

Fig. 7 represents a method 70 for providing an energy storage unit 10. The method 70 comprises several steps. In step 72, a plurality of energy storage sub-units 16 connected in series are provided. In step 74, one or more transformers 14 are provided. In step 76, each of the plurality of energy storage sub-units 16 is connected in parallel via the one or more transformers 14. The one or more transformers 14 comprise a core with a plurality of windings 22, 24 wound around the core.

The method 70 may comprise step 76 of connecting each of the plurality of energy storage sub-units 16 in parallel via the one or more transformers 14, which may be done by connecting a power electronics circuit between one of the one or more transformers 14 and one of the plurality of energy storage sub-units 16.

The described energy storage units 10 (and the system of fig. 6) may be AC or DC microgrids. Their control may be based on SoC and/or SoH of the energy storage sub-units 16.

The described energy storage units 10 (described throughout the disclosure) may comprise 200 W to 1000 W single phase inverters. These can be compact enough to take the balancing task.

In an alternative, the described energy storage units 10 (described throughout the disclosure) may comprise inverters with one or more of the following requirements:
- Power rating: 200 W - 1 kW (up to the application).
- Insulation level: < 1.5 kV DC.
- AC frequency: 50 Hz - 10 kHz (up to the detailed design at PD phase).
- AC voltage: 110 V - 1000 V AC peak (up to the detailed design at PD phase).
- DC voltage: module voltage 50 V - 200 V DC (up to the application).
- Cooling: force air or natural cooling.
- Isolation of the transformer primary to secondary: 1.5 kV DC or 1 kV AC rms.
- Transformer frequency: same as the AC frequency.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. An energy storage unit (10) comprising:
a plurality of energy storage sub-units (16) connected in series; and
one or more transformers, wherein each of the plurality of energy storage sub-units (16) is also connected together in parallel via the one or more transformers;
wherein the one or more transformers comprise a core with a plurality of windings (22, 24) wound around the core.

2. Energy storage unit according to claim 1, wherein the one or more transformers is one transformer and each of the plurality of energy storage sub-units (16) is connected to one of the plurality of windings (22, 24).

3. Energy storage unit according to claim 2, wherein the one transformer is connected to a bus (12) via another winding wound around the core.

4. Energy storage unit according to claim 2 or 3, wherein the one transformer is a multi-phase transformer (14).

5. Energy storage unit according to claim 1, wherein the one or more transformers are a plurality of multi-phase transformers (14) with three or more phases, wherein each transformer is on a first side connected to one of the plurality of energy storage sub-units (16).

6. Energy storage unit according to claim 5, wherein each transformer of the plurality of multi-phase transformers (14) is connected to a bus (12) via another winding wound around the core of the corresponding transformer.

7. Energy storage unit according to claim 3 or claim 6, wherein the one or more transformers is connected to the bus (12) using an alternating current to direct current, AC-to-DC, converter.

8. Energy storage unit according to claim 3 or claim 6, wherein the bus (12) is configured for alternating current, AC; or
wherein the bus (12) is configured for direct current, DC.

9. Energy storage unit according to any one of claims 1 to 7, further comprising a power electronics circuit connected between one of the energy storage sub-units (16) and one of the one or more transformer.

10. Energy storage unit according to any one of claim 2 or 3, or 7, when dependent on claim 2, further comprising a plurality of power electrics circuits, each of the plurality of power electrics circuits connected between a corresponding one of the energy storage sub-units (16) and the transformer.

11. Energy storage unit according to claim 9, wherein the power electronics circuit comprises a DC-to-AC converter (18).

12. Energy storage unit according to any one of claims 1 to 11, wherein each of the plurality of energy storage sub-units (16) is a direct current, DC, energy storage.

13. Energy storage unit according to any one of claims 1 to 11, wherein the energy storage unit (10) is an energy storage module and the plurality of energy storage sub-units (16) is a plurality of energy storage cells; or
wherein the energy storage unit (10) is an energy storage rack and the plurality energy storage sub-units is a plurality of energy storage modules.

14. System comprising two energy storage units (10) according to claim 3 or claim 6, or according to any one of claims 7 to 13 when dependent on claim 3 or 6, wherein the two energy storage units (10) are connected to the bus (12).

15. A method (70) for providing an energy storage unit (10), comprising:
providing (72) a plurality of energy storage sub-units (16) connected in series;
providing (74) one or more transformer; and
connecting (76) each of the plurality of energy storage sub-units (16) in parallel via the one or more transformers;
wherein the one or more transformers comprise a core with a plurality of windings (22, 24) wound around the core.

16. Method according to claim 15, further comprising connecting (76) each of the plurality of energy storage sub-units (16) in parallel via the one or more transformers by connecting a power electronics circuit between one of the one or more transformer and one of the plurality of energy storage sub-units (16).
